# FASCICULE DE BREVET EUROPEEN

(11) **EP 2 071 985 B1**
(45) Date de publication et mention de la délivrance du brevet: **23.03.2011**
(21) Numéro de dépôt: 08356155.5
(22) Date de dépôt: 16.12.2008
(51) Int. Cl.: A47J 27/05

(54) **Cuiseur vapeur avec dispositif de remplissage**
Dampfkochtopf mit Auffüllvorrichtung
Steam cooker with refilling system

(30) Priorité: 21.12.2007 FR 0709076
(43) Date de publication de la demande: 24.06.2009
(73) Titulaire: SEB S.A., 69130 Ecully (FR)
(72) Inventeur: Dumoux, Philippe, 21120 Gemeaux (FR)
(74) Mandataire: Kiehl, Hubert

(56) Documents cités:
- EP-A- 1 260 164
- WO-A-00/30510
- GB-A- 191 307 612
- US-A- 263 049
- US-A- 2 576 313

## Description

La présente invention concerne le domaine technique des appareils et ustensiles de cuisson pour la cuisson à la vapeur.

La présente invention concerne plus particulièrement un cuiseur vapeur à éléments superposés comprenant une base de production de vapeur comportant un dispositif de remplissage.

Une base de production de vapeur pour cuiseur vapeur comportant des dispositifs de remplissage est connue des documents US 5 893 319, WO 00/30510, EP 1 260 164, EP 1 380 242. La présence d'une ou deux ouvertures de remplissage permet d'éviter le retrait des éléments de cuisson disposés sur la base de production de vapeur pour procéder au remplissage du réservoir d'eau. Toutefois la position des ouvertures de remplissage en face avant ou sur les côtés opposés peut s'avérer contraignante pour l'utilisateur.

Un cuiseur vapeur présentant un réservoir d'eau associé à une ouverture annulaire de remplissage est connu du document US 263 049.

Un objet de la présente invention est de faciliter l'utilisation d'un cuiseur vapeur.

Un autre objet de la présente invention est de réduire l'encombrement d'un cuiseur vapeur en position de rangement.

Un autre objet de la présente invention est de faciliter le remplissage du réservoir d'eau de la base de production de vapeur d'un cuiseur vapeur.

Ces objets sont atteints avec un cuiseur vapeur à éléments superposés, comprenant une base de production de vapeur et un élément de cuisson disposé sur la base de production de vapeur, la base de production de vapeur comportant un élément de base inférieur formant un réservoir d'eau et un élément de base supérieur disposé au dessus de l'élément de base inférieur, l'élément de base inférieur présentant un bord supérieur périphérique ménageant avec l'élément de base supérieur une ouverture annulaire de remplissage communiquant avec le réservoir d'eau par au moins un passage d'écoulement, l'élément de base supérieur reposant dans l'élément de base inférieur à l'intérieur du bord supérieur périphérique, l'élément de base supérieur présentant au moins un passage de vapeur entouré par une paroi latérale périphérique, du fait que la paroi latérale périphérique de l'élément de base supérieur peut être engagée dans l'élément de cuisson lorsque l'élément de base supérieur est retourné.

Cette disposition permet d'obtenir un cuiseur vapeur à éléments superposés présentant un remplissage facilité et un rangement compact, avec un réservoir d'eau de capacité importante. Cette disposition permet également de réduire l'encombrement en largeur de l'élément de base supérieur, ce qui contribue à faciliter l'empilage de l'élément de base supérieur dans l'élément de cuisson.L'utilisateur peut utiliser toute la périphérie de l'élément de base inférieur pour procéder au remplissage du réservoir d'eau. Cette disposition permet de proposer un cuiseur vapeur dont le remplissage du réservoir d'eau est particulièrement aisé, notamment en cours de cuisson. L'élément de base supérieur peut reposer sur l'élément de base inférieur directement ou par l'intermédiaire d'un ou plusieurs éléments d'appui. Un ou plusieurs passages d'écoulement peuvent alors être ménagés dans la paroi latérale périphérique de l'élément de base supérieur, et/ou entre l'élément de base inférieur et la paroi latérale périphérique de l'élément de base supérieur, et/ou dans l'élément de base inférieur pour former un conduit en dessous de la paroi latérale périphérique de l'élément de base supérieur.

Avantageusement, l'élément de base supérieur repose directement sur l'élément de base inférieur.

Avantageusement, l'élément de base supérieur s'inscrit dans l'élément de base inférieur à l'intérieur du bord supérieur périphérique. En d'autres termes, l'ouverture annulaire de remplissage forme une ouverture annulaire supérieure. L'élément de base supérieur présente alors un encombrement réduit en surface, ce qui permet de faciliter l'obtention d'un rangement compact. Le remplissage du réservoir d'eau est également facilité..

Selon une forme de réalisation avantageuse, la paroi latérale périphérique de l'élément de base supérieur repose dans l'élément de base inférieur. En alternative, l'élément de base supérieur pourrait comporter des moyens d'appui agencés à l'intérieur et/ou à l'extérieur de la paroi latérale périphérique.

Avantageusement, la paroi latérale périphérique de l'élément de base supérieur présente un bord inférieur muni d'encoches. Ainsi les encoches forment des passages d'écoulement vers le réservoir d'eau. Cette disposition facilite la réalisation de l'élément supérieur, notamment par moulage d'une pièce en matière plastique. Cette disposition simplifie également l'écoulement de l'eau par les passages d'écoulement formés par les encoches.

Avantageusement encore, pour éviter la retombée de jus de cuisson dans le réservoir d'eau, l'élément de base supérieur forme un bac récupérateur. Cette disposition permet d'obtenir une grande capacité de récupération de jus tout en conservant un rangement compact.

Avantageusement alors, le bac récupérateur présente un fond entourant ledit passage de vapeur. Cette disposition permet de positionner le passage de vapeur en position centrale et d'améliorer la répartition de la diffusion de vapeur.

Avantageusement alors, le bac récupérateur présente une paroi latérale annulaire agencée à l'intérieur de la paroi latérale périphérique de l'élément de base supérieur. Cette disposition permet de faciliter le moulage de l'élément supérieur, et aussi de diminuer la température de la paroi latérale périphérique.

Avantageusement encore, l'élément de base supérieur présente une paroi annulaire extérieure tombante agencée à l'extérieur de la paroi latérale périphérique. Cette disposition permet de favoriser la condensation de la vapeur s'échappant du réservoir d'eau.

Avantageusement alors, la paroi annulaire extérieure tombante présente un bord périphérique inférieur agencé plus bas que le bord supérieur périphérique de l'élément de base inférieur. Cette disposition permet de réduire le passage de remplissage du réservoir d'eau.

Avantageusement alors, la paroi annulaire extérieure tombante de l'élément de base supérieur retourné dans l'élément de cuisson repose sur un bord supérieur de l'élément de cuisson. Cette disposition permet de faciliter le retrait de l'élément de base supérieur retourné.

Selon un mode de réalisation préféré, l'élément de cuisson appartient à une enceinte de cuisson alimentée en vapeur par le passage de vapeur.

Selon un mode de réalisation adapté à la cuisson des aliments par contact avec la vapeur, l'élément de cuisson présente un fond perforé.

Avantageusement encore, le réservoir d'eau est associé à des moyens de chauffe électriques. Cette disposition permet de réaliser une base de cuiseur vapeur électrique.

Avantageusement alors, le réservoir d'eau comporte une première partie alimentée par l'ouverture annulaire de remplissage et une deuxième partie associée aux moyens de chauffe électriques, la première partie communiquant avec la deuxième partie. Cette disposition permet d'obtenir plus rapidement de la vapeur.

L'invention sera mieux comprise à l'étude d'un exemple de réalisation, pris à titre nullement limitatif, illustré dans les figures annexées, dans lesquelles :
- la figure 1 est une vue en perspective d'un cuiseur vapeur à éléments superposés comportant une base de production de vapeur selon l'invention, en configuration d'utilisation avec deux éléments de cuisson superposés et un couvercle.
- la figure 2 est une vue en coupe du cuiseur vapeur illustré à la figure 1,

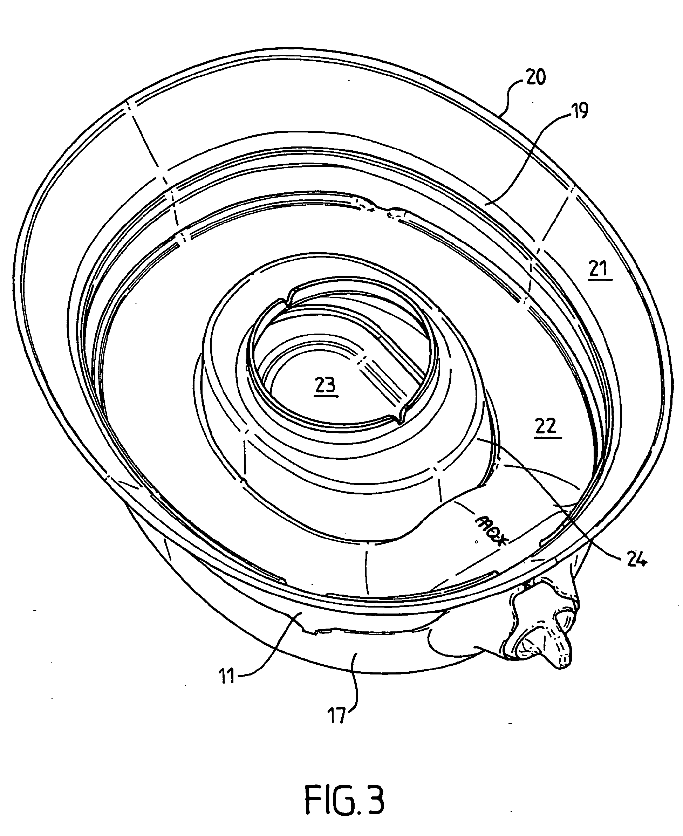

- la figure 3 est une vue en perspective d'un élément de base inférieur appartenant à la base de production de vapeur visible sur les figures 1 et 2,
- la figure 4 est une vue en perspective de dessous d'un élément de base supérieur appartenant à la base de production de vapeur visible sur les figures 1 et 2,
- la figure 5 est une vue en coupe du cuiseur vapeur illustré sur les figures 1 et 3, en configuration de rangement avec trois éléments de cuisson superposables et un couvercle.

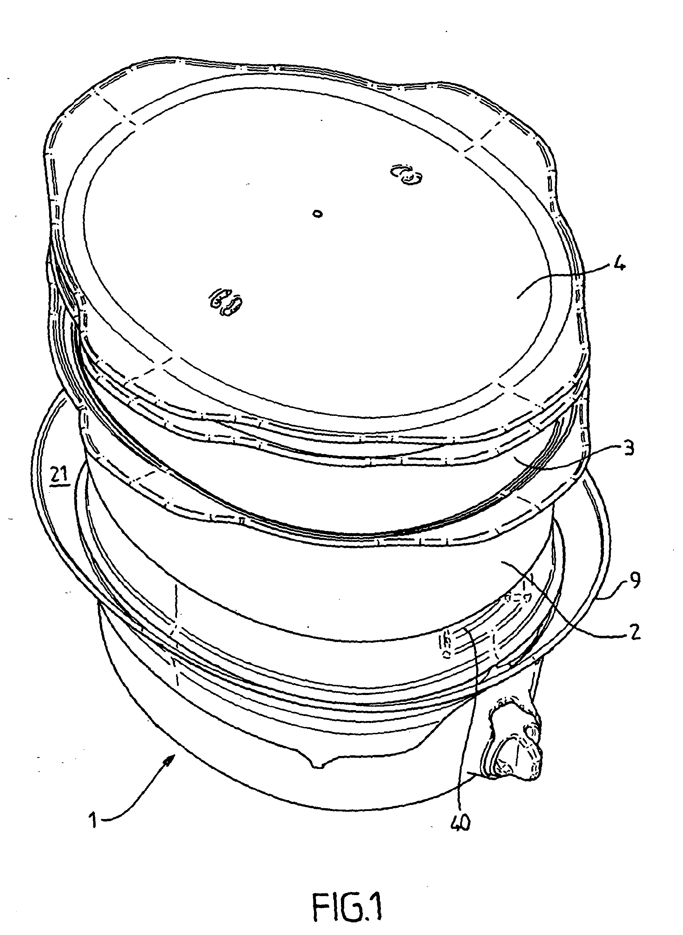

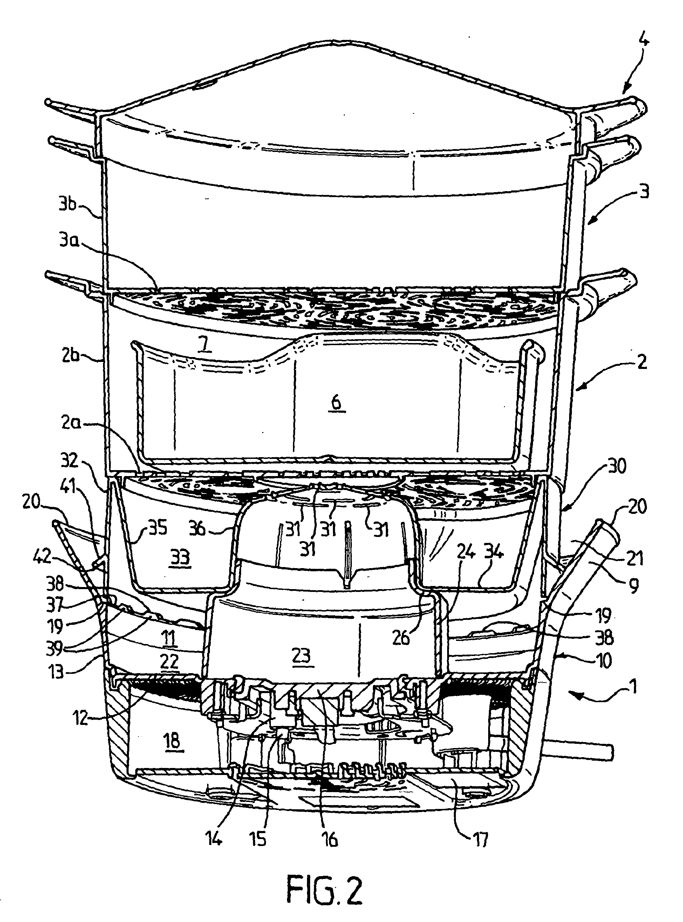

Les figures 1 et 2 illustrent un exemple de réalisation d'un cuiseur vapeur à éléments superposés comportant une base de production de vapeur 1 selon l'invention.

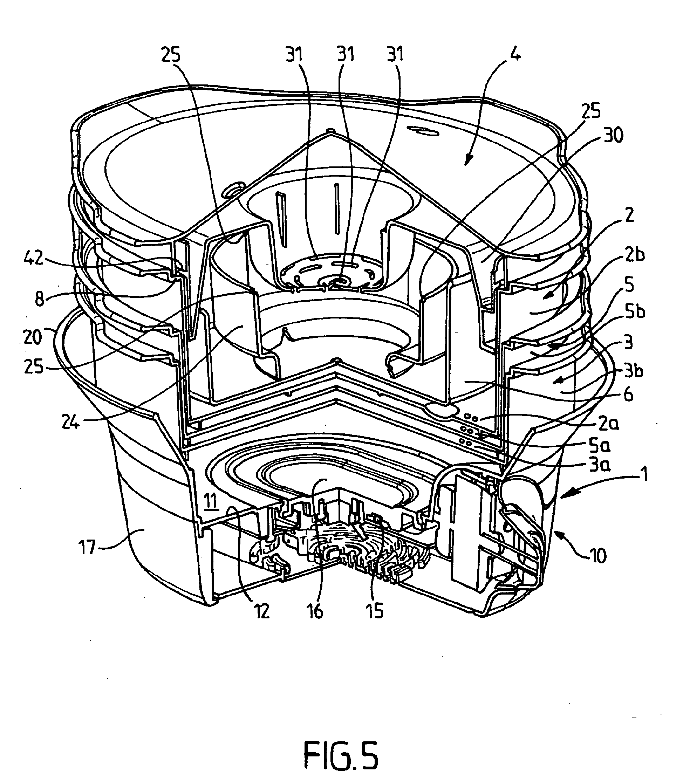

Le cuiseur vapeur à éléments superposés illustré sur les figures 1 et 2 en configuration d'utilisation comporte également un élément de cuisson 2 disposé sur la base de production de vapeur 1, un autre élément de cuisson 3 disposé sur l'élément de cuisson 2, et un couvercle 4 disposé sur l'autre élément de cuisson 3. Un troisième élément de cuisson 5, représenté sur la figure 5, peut être intercalé si désiré entre l'élément de cuisson 2 et l'autre élément de cuisson 3. Un bol indépendant 6 peut être placé dans l'élément de cuisson 2, dans l'autre élément de cuisson 3 ou dans le troisième élément de cuisson 5.

L'élément de cuisson 2 présente un fond perforé 2a prévu pour le passage de la vapeur issue de la base de production de vapeur 1. Le fond perforé 2a est entouré par une paroi latérale supérieure 2b. L'autre élément de cuisson 3 et le troisième élément de cuisson 5 présentent également des fonds perforés 3a, 5a, représentés schématiquement sur la figure 5, ainsi que des parois latérales supérieures 3b, 5b. L'élément de cuisson 2, l'autre élément de cuisson 3 et le troisième élément de cuisson 5 sont avantageusement réalisés dans une matière plastique transparente tel que le polycarbonate. L'élément de cuisson 2 appartient à une enceinte de cuisson 7. L'élément de cuisson 2 forme l'enceinte de cuisson 7 avec l'autre élément de cuisson 3 et/ou le troisième élément de cuisson 5 et/ou le couvercle 4.

La base de production de vapeur 1 comporte un élément de base inférieur 10 et un élément de base supérieur 30 disposé au dessus de l'élément de base inférieur 10. Plus particulièrement, l'élément de base supérieur 30 repose directement sur l'élément de base inférieur 10.

L'élément de base inférieur 10 forme un réservoir d'eau 11 délimité par un fond 12 et une paroi annulaire 13. Le réservoir d'eau 11 est associé à des moyens de chauffe électriques 14. Tel que représenté sur la figure 2, les moyens de chauffe électrique 14 sont formés par un élément chauffant blindé 15 sur lequel est surmoulée une plaque 16 avantageusement réalisée en aluminium. La plaque 16 est montée dans une ouverture du fond 12. Un capot inférieur 17 monté sous le fond 12 ferme un compartiment 18 logeant les connexions électriques de l'appareil.

L'élément de base inférieur 10 présente un bord supérieur périphérique 20 ménageant avec l'élément de base supérieur 30 une ouverture annulaire de remplissage 21 communiquant avec le réservoir d'eau 11 par au moins un passage d'écoulement 39. L'élément de base supérieur 30 repose dans l'élément de base inférieur 10 à l'intérieur du bord supérieur périphérique 20.

Tel que bien visible sur les figures 1 et 2, l'élément de base supérieur 30 s'inscrit dans l'élément de base inférieur 10 à l'intérieur du bord supérieur périphérique 20. En d'autres termes, le bord supérieur périphérique 20 de l'élément de base inférieur 10 entoure l'élément de base supérieur 30.

Tel que visible sur les figures 1 et 2, l'ouverture annulaire de remplissage 21 forme une ouverture annulaire supérieure.

Plus particulièrement, le réservoir d'eau 11 comporte une première partie 22 alimentée par l'ouverture annulaire de remplissage 21 et une deuxième partie 23 associée aux moyens de chauffe électriques 14. La première partie 22 et la deuxième partie 23 du réservoir d'eau 11 sont délimitées par une paroi 24 agencée autour des moyens de chauffe électriques 14. La paroi 24 est amovible par rapport à l'élément de base inférieur 10 et à l'élément de base supérieur 30. La première partie 22 du réservoir d'eau 11 communique avec la deuxième partie 23 par au moins un passage inférieur 25 mieux visible sur la figure 5. La paroi 24 est annulaire. La première partie 22 du réservoir d'eau 11 est également annulaire. La deuxième partie 23 du réservoir d'eau 11 forme une chambre de vaporisation.

La partie supérieure de la paroi annulaire 13 s'élargit vers le haut pour former un entonnoir 9 permettant le déversement de l'eau dans le réservoir d'eau 11. Un rebord interne 19 de la paroi annulaire 13 sert d'appui pour l'élément de base supérieur 30 disposé sur l'élément de base inférieur 10.

L'élément de base supérieur 30 est prévu pour supporter l'élément de cuisson 2. L'élément de base supérieur 30 présente au moins un passage de vapeur 31 entouré par une paroi latérale périphérique 32. Tel que représenté sur la figure 2, la paroi latérale périphérique 32 permet de canaliser la vapeur par les passages de vapeur 31 vers l'élément de cuisson 2 disposé sur l'élément de base supérieur 30. Ainsi l'enceinte de cuisson 7 est alimentée en vapeur par les passages de vapeur 31.

L'élément de base supérieur 30 forme un bac récupérateur 33 présentant un fond 34 et une paroi latérale annulaire 35 agencée à l'intérieur de la paroi latérale périphérique 32. Le fond 34 repose sur un épaulement annulaire 26 de la paroi 24. Cette disposition permet d'obtenir un appui central pour l'élément de base supérieur 30. Ainsi l'élément de base supérieur 30 peut être réalisé - dans une matière plastique relativement souple telle que le polypropylène.

La paroi latérale annulaire 35 et la paroi latérale périphérique 32 sont réunies par leur sommet. Plusieurs passages de vapeur 31 sont ménagés au sommet d'une protubérance 36 issue du fond 34. Ainsi le fond 34 entoure au moins un passage de vapeur 31, l'élément de base supérieur 30 permet la transmission de la vapeur vers l'élément de cuisson 2 disposé sur la base de production de vapeur 1 ainsi que la récupération des jus issus de l'élément de cuisson 2, et/ou de l'autre élément de cuisson 3 et/ou du troisième élément de cuisson 5. La partie supérieure de la paroi 24 est engagée dans la protubérance 36 pour guider la vapeur issue de la deuxième partie 23 du réservoir d'eau 11 formant chambre de vaporisation.

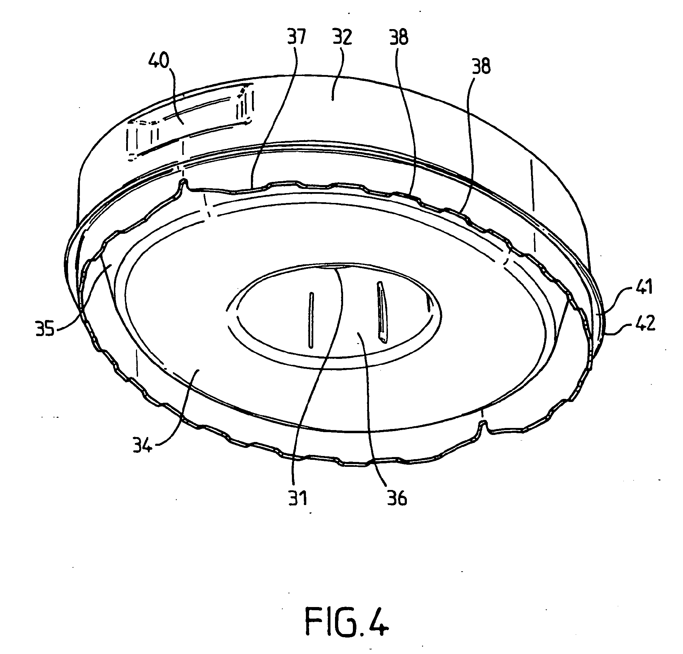

La paroi latérale périphérique 32 de l'élément de base supérieur 30 repose dans l'élément de base inférieur 10. Tel que bien visible sur la figure 2, la paroi latérale périphérique 32 repose sur le rebord interne 19. Pour permettre le remplissage du réservoir d'eau 11, la paroi latérale périphérique 32 présente un bord inférieur 37 muni d'encoches 38, mieux visibles sur la figure 4. Les encoches 38 de l'élément de base supérieur 30 ménagent avec l'élément de base inférieur 10 les passages d'écoulement 39 vers le réservoir d'eau 11.

La paroi latérale périphérique 32 présente deux renfoncements 40 agencés de manière opposée, prévus pour faciliter la préhension de l'élément de base supérieur 30.

L'élément de base supérieur 30 présente une paroi annulaire extérieure tombante 41 agencée à l'extérieur de la paroi latérale périphérique 32. La paroi annulaire extérieure tombante 41 présente un bord périphérique inférieur 42 agencé plus bas que le bord supérieur périphérique 20 de l'élément de base inférieur 10 lorsque l'élément de base supérieur 30 est en place dans l'élément de base inférieur 10.

La figure 5 représente une configuration de rangement du cuiseur vapeur illustré sur les figures 1 et 2 en configuration d'utilisation, un troisième élément de cuisson 5 étant intercalé entre l'élément de cuisson 2 et l'autre élément de cuisson 3. L'élément de cuisson 2, l'autre élément de cuisson 3 et le troisième élément de cuisson 5 sont gigognes et peuvent être empilés dans un ordre inverse pour occuper une configuration de rangement plus compacte.

Tel que représenté sur la figure 5, l'autre élément de cuisson 3 est logé dans l'élément de base inférieur 10, le troisième élément de cuisson 5 est logé dans l'autre élément de cuisson 3, l'élément de cuisson 2 est logé dans le troisième élément de cuisson 5, le bol indépendant 6 est logé dans l'élément de cuisson 2, la paroi 24 est logée retournée dans le bol indépendant 6, l'élément de base supérieur 30 est logé retourné dans l'élément de cuisson 2 au dessus du bol indépendant 6 et de la paroi 24 retournée. A cet effet, la paroi annulaire extérieure tombante 41 de l'élément de base supérieur 30 retourné dans l'élément de cuisson 2 repose sur un bord supérieur 8 de l'élément de cuisson 2. Le couvercle 4 repose sur l'élément de cuisson 2 en périphérie de l'élément de base supérieur 30 retourné.

Ainsi, tel que bien visible sur la figure 5, la paroi latérale périphérique 32 de l'élément de base supérieur 30 peut être engagée dans l'élément de cuisson 2 lorsque l'élément de base supérieur 30 est retourné.

La présente réalisation permet de remplir le réservoir d'eau 11 sur toute la périphérie de la base de production de vapeur 1 grâce à l'ouverture annulaire de remplissage 21. Le remplissage est facilité du fait que l'élément de base supérieur 30 s'inscrit dans l'élément de base inférieur 10 à l'intérieur du bord supérieur périphérique 20 de l'élément de base inférieur 10.

La présente réalisation permet de limiter les sorties de vapeur par l'ouverture annulaire de remplissage 21 du fait que la paroi 24 conduit la vapeur issue de la chambre de vaporisation vers les passages de vapeur 31.

La présente réalisation permet de plus un rangement compact et une extraction aisée des différents éléments du cuiseur vapeur.

A titre de variante, l'élément de base supérieur 30 peut présenter au moins un passage de vapeur 31 entouré par la paroi latérale périphérique 32.

A titre de variante, l'élément de base supérieur 30 peut ménager avec l'élément de base inférieur 10 un ou plusieurs passages d'écoulement 39 dans le réservoir d'eau 11.

A titre de variante, le rebord interne 19 de l'élément de base inférieur 10 pourrait être conformé pour ménager au moins un passage d'écoulement vers le réservoir d'eau 11 en complément ou en remplacement des encoches 38.

A titre de variante, l'élément de base supérieur 30 ne repose pas nécessairement sur un rebord interne de l'élément de base inférieur 10.

A titre de variante, un ou plusieurs passages d'écoulement vers le réservoir d'eau 11 peuvent notamment être ménagés dans la paroi latérale périphérique 32 de l'élément de base supérieur 30, et/ou entre l'élément de base inférieur 10 et la paroi latérale périphérique 32 de l'élément de base supérieur 30, et/ou dans l'élément de base inférieur 10 en dessous de la paroi latérale périphérique 32.

La présente invention n'est nullement limitée aux exemples de réalisation décrits et à leurs variantes, mais englobe de nombreuses modifications dans le cadre des revendications.

## Revendications

1. Cuiseur vapeur à éléments superposés, comprenant une base de production de vapeur (1) et un élément de cuisson (2) disposé sur la base de production de vapeur (1), la base de production de vapeur (1) comportant un élément de base inférieur (10) formant un réservoir d'eau (11) et un élément de base supérieur (30) disposé au dessus de l'élément de base inférieur (10), l'élément de base inférieur (10) présentant un bord supérieur périphérique (20) ménageant avec l'élément de base supérieur (30) une ouverture annulaire de remplissage (21) communiquant avec le réservoir d'eau (11) par au moins un passage d'écoulement (39), l'élément de base supérieur (30) reposant dans l'élément de base inférieur (10) à l'intérieur du bord supérieur périphérique (20), l'élément de base supérieur (30) présentant au moins un passage de vapeur (31) entouré par une paroi latérale périphérique (32), **caractérisé en ce que** la paroi latérale périphérique (32) de l'élément de base supérieur (30) peut être engagée dans l'élément de cuisson (2) lorsque l'élément de base supérieur (30) est retourné.

2. Cuiseur vapeur à éléments superposés selon la revendication 1, **caractérisé en ce que** l'élément de base supérieur (30) repose directement sur l'élément de base inférieur (10).

3. Cuiseur vapeur à éléments superposés selon l'une des revendications 1 ou 2, **caractérisé en ce que** l'élément de base supérieur (30) s'inscrit dans l'élément de base inférieur (10) à l'intérieur du bord supérieur périphérique (20).

4. Cuiseur vapeur à éléments superposés selon l'une des revendications 1 à 3, **caractérisé en ce que** la paroi latérale périphérique (32) de l'élément de base supérieur (30) repose dans l'élément de base inférieur (10).

5. Cuiseur vapeur à éléments superposés selon la revendication 4, **caractérisé en ce que** la paroi latérale périphérique (32) de l'élément de base supérieur (30) présente un bord inférieur (37) muni d'encoches (38).

6. Cuiseur vapeur à éléments superposés selon l'une des revendications 1 à 5, **caractérisé en ce que** l'élément de base supérieur (30) forme un bac récupérateur (33).

7. Cuiseur vapeur à éléments superposés selon la revendication 6, **caractérisé en ce que** le bac récupérateur (33) présente un fond (34) entourant ledit passage de vapeur (31).

8. Cuiseur vapeur à éléments superposés selon l'une des revendications 6 ou 7, **caractérisé en ce que** le bac récupérateur (33) présente une paroi latérale annulaire (35) agencée à l'intérieur de la paroi latérale périphérique (32) de l'élément de base supérieur (30).

9. Cuiseur vapeur à éléments superposés selon l'une des revendications 1 à 8, **caractérisé en ce que** l'élément de base supérieur (30) présente une paroi annulaire extérieure tombante (41) agencée à l'extérieur de la paroi latérale périphérique (32).

10. Cuiseur vapeur à éléments superposés selon la revendication 9, **caractérisé en ce que** la paroi annulaire extérieure tombante (41) présente un bord périphérique inférieur (42) agencé plus bas que le bord supérieur périphérique (20) de l'élément de base inférieur (10).

11. Cuiseur vapeur à éléments superposés selon l'une des revendications 9 ou 10, **caractérisé en ce que** la paroi annulaire extérieure tombante (41) de l'élément de base supérieur (30) retourné dans l'élément de cuisson (2) repose sur un bord supérieur (8) de l'élément de cuisson (2).

12. Cuiseur vapeur à éléments superposés selon l'une des revendications 1 à 11, **caractérisé en ce que** l'élément de cuisson (2) appartient à une enceinte de cuisson (7) alimentée en vapeur par le passage de vapeur (31).

13. Cuiseur vapeur à éléments superposés selon l'une des revendications 1 à 12, **caractérisé en ce que** l'élément de cuisson (2) présente un fond perforé (2a).

14. Cuiseur vapeur à éléments superposés selon l'une des revendications 1 à 13, **caractérisé en ce que** le réservoir d'eau (11) est associé à des moyens de chauffe électriques (14).

15. Cuiseur vapeur à éléments superposés selon la revendication 14, **caractérisé en ce que** le réservoir d'eau (11) comporte une première partie (22) alimentée par l'ouverture annulaire de remplissage (21) et une deuxième partie (23) associée aux moyens de chauffe électriques (14), la première partie (22) communiquant avec la deuxième partie (23).

## Claims

1. A steam cooker with superposed elements, comprising a steam-producing base (1) and a cooking element (2) arranged on the steam-producing base (1), the steam-producing base (1) comprising a lower base element (10) forming a water tank (11) and an upper base element (30) arranged above the lower base element (10), the lower base element (10) having a peripheral upper edge (20) forming with the upper base element (30) an annular filling opening (21) communicating with the water tank (11) by at least one flow passage (39), the upper base element (30) resting in the lower base element (10) inside the peripheral upper edge (20), the upper base element (30) having at least one steam passage (31) surrounded by a peripheral side wall (32), **characterised in that** the peripheral side wall (32) of the upper base element (30) can be engaged in the cooking element (2) when the upper base element (30) is turned over.

2. A steam cooker with superposed elements according to claim 1, **characterised in that** the upper base element (30) rests directly on the lower base element (10).

3. A steam cooker with superposed elements according to one of claims 1 or 2, **characterised in that** the upper base element (30) is inscribed in the lower base element (10) inside the peripheral upper edge (20).

4. A steam cooker with superposed elements according to one of claims 1 to 3, **characterised in that** the peripheral side wall (32) of the upper base element (30) rests in the lower base element (10).

5. A steam cooker with superposed elements according to claim 4, **characterised in that** the peripheral side wall (32) of the upper base element (30) has a lower edge (37) provided with slots (38).

6. A steam cooker with superposed elements according to one of claims 1 to 5, **characterised in that** the upper base element (30) forms a drip tray (33).

7. A steam cooker with superposed elements according to claim 6, **characterised in that** the drip tray (33) has a base (34) surrounding said steam passage (31).

8. A steam cooker with superposed elements according to one of claims 6 or 7, **characterised in that** the drip tray (33) has an annular side wall (35) arranged inside the peripheral side wall (32) of the upper base element (30).

9. A steam cooker with superposed elements according to one of claims 1 to 8, **characterised in that** the upper base element (30) has an outer annular drop wall (41) arranged outside the peripheral side wall (32).

10. A steam cooker with superposed elements according to claim 9, **characterised in that** the outer annular drop wall (41) has a peripheral lower edge (42) arranged lower than the peripheral upper edge (20) of the lower base element (10).

11. A steam cooker with superposed elements according to one of claims 9 or 10, **characterised in that** the outer annular drop wall (41) of the upper base element (30) turned over in the cooking element (2) rests on an upper edge (8) of the cooking element (2).

12. A steam cooker with superposed elements according to one of claims 1 to 11, **characterised in that** the cooking element (2) belongs to a cooking chamber (7) into which steam is fed by the steam passage (31).

13. A steam cooker with superposed elements according to one of claims 1 to 12, **characterised in that** the cooking element (2) has a perforated base (2a).

14. A steam cooker with superposed elements according to one of claims 1 to 13, **characterised in that** the water tank (11) is associated with electrical heating means (14).

15. A steam cooker with superposed elements according to claim 14, **characterised in that** the water tank (11) comprises a first part (22) fed by the annular filling opening (21) and a second part (23) associated with the electrical heating means (14), the first part (22) communicating with the second part (23).

## Patentansprüche

1. Dampfgarer mit übereinander gelagerten Elementen, umfassend eine Dampferzeugungsbasis (1) und ein Garelement (2), das auf der Dampferzeugungsbasis (1) angeordnet ist, wobei die Dampferzeugungsbasis (1) ein unteres Basiselement (10), das einen Wasserbehälter (11) bildet, und ein oberes Basiselement (30), das über dem unteren Basiselement (10) angeordnet ist, umfasst, wobei das untere Basiselement (10) einen umlaufenden, oberen Rand (20) aufweist, der mit dem oberen Basiselement (30) eine ringförmige Füllöffnung (21) ausbildet, die mit dem Wasserbehälter (11) über mindestens einen Abfließdurchlass (39) verbunden ist, wobei das obere Basiselement (30) im unteren Basiselement (10) innerhalb des umlaufenden, oberen Randes (20) aufliegt, wobei das obere Basiselement (30) mindestens einen Dampfdurchlass (31) aufweist, der von einer umlaufenden Seitenwand (32) umgeben ist, **dadurch gekennzeichnet, dass** die umlaufende Seitenwand (32) des oberen Basiselementes (30) in das Garelement (2) eingesetzt werden kann, wenn das obere Basiselement (30) umgedreht ist.

2. Dampfgarer mit übereinander gelagerten Elementen nach Anspruch 1, **dadurch gekennzeichnet, dass** das obere Basiselement (30) direkt auf dem unteren Basiselement (10) aufliegt.

3. Dampfgarer mit übereinander gelagerten Elementen nach einem der Ansprüche 1 oder 2, **dadurch gekennzeichnet, dass** sich das obere Basiselement (30) in das untere Basiselement (10) innerhalb des umlaufenden, oberen Randes (20) einfügt.

4. Dampfgarer mit übereinander gelagerten Elementen nach einem der Ansprüche 1 bis 3, **dadurch gekennzeichnet, dass** die umlaufende Seitenwand (32) des oberen Basiselementes (30) im unteren Basiselement (10) aufliegt.

5. Dampfgarer mit übereinander gelagerten Elementen nach Anspruch 4, **dadurch gekennzeichnet, dass** die umlaufende Seitenwand (32) des oberen Basiselementes (30) einen unteren Rand (37) aufweist, der mit Einkerbungen (38) versehen ist.

6. Dampfgarer mit übereinander gelagerten Elementen nach einem der Ansprüche 1 bis 5, **dadurch gekennzeichnet, dass** das obere Basiselement (30) einen Sammelbehälter (33) bildet.

7. Dampfgarer mit übereinander gelagerten Elementen nach Anspruch 6, **dadurch gekennzeichnet, dass** der Sammelbehälter (33) einen Boden (34) aufweist, der den Dampfdurchlass (31) umgibt.

8. Dampfgarer mit übereinander gelagerten Elementen nach einem der Ansprüche 6 oder 7, **dadurch gekennzeichnet, dass** der Sammelbehälter (33) eine ringförmige Seitenwand (35) aufweist, die innerhalb der umlaufenden Seitenwand (32) des oberen Basiselementes (30) angeordnet ist.

9. Dampfgarer mit übereinander gelagerten Elementen nach einem der Ansprüche 1 bis 8, **dadurch gekennzeichnet, dass** das obere Basiselement (30) eine abfallende, ringförmige Außenwand (41) aufweist, die außerhalb der umlaufenden Seitenwand (32) angeordnet ist.

10. Dampfgarer mit übereinander gelagerten Elementen nach Anspruch 9, **dadurch gekennzeichnet, dass** die abfallende, ringförmige Außenwand (41) einen umlaufenden, unteren Rand (42) aufweist, der tiefer angeordnet ist als der umlaufende, obere Rand (20) des unteren Basiselementes (10).

11. Dampfgarer mit übereinander gelagerten Elementen nach einem der Ansprüche 9 oder 10, **dadurch gekennzeichnet, dass** die abfallende, ringförmige Außenwand (41) des oberen Basiselementes (30), das sich umgedreht im Garelement (2) befindet, auf einem oberen Rand (8) des Garelementes (2) aufliegt.

12. Dampfgarer mit übereinander gelagerten Elementen nach einem der Ansprüche 1 bis 11, **dadurch gekennzeichnet, dass** das Garelement (2) einem Garraum (7) angehört, der über den Dampfdurchlass (31) mit Dampf gespeist wird.

13. Dampfgarer mit übereinander gelagerten Elementen nach einem der Ansprüche 1 bis 12, **dadurch gekennzeichnet, dass** das Garelement (2) einen perforierten Boden (2a) aufweist.

14. Dampfgarer mit übereinander gelagerten Elementen nach einem der Ansprüche 1 bis 13, **dadurch gekennzeichnet, dass** der Wasserbehälter (11) mit elektrischen Heizmitteln (14) verbunden ist.

15. Dampfgarer mit übereinander gelagerten Elementen nach Anspruch 14, **dadurch gekennzeichnet, dass** der Wasserbehälter (11) einen ersten Teil (22), der über die ringförmige Füllöffnung (21) gespeist wird, und einen zweiten Teil (23) umfasst, der mit den elektrischen Heizmitteln (14) verbunden ist, wobei der erste Teil (22) mit dem zweiten Teil (23) verbunden ist.
